# EUROPÄISCHE PATENTSCHRIFT

(11) **EP 0 965 014 B1**
(45) Veröffentlichungstag und Bekanntmachung des Hinweises auf die Patenterteilung: **26.06.2002**
(21) Anmeldenummer: 98901298.4
(22) Anmeldetag: 11.02.1998
(51) Int. Cl.: F16L 25/00, F16L 37/084, H02G 3/06

(54) **VERBINDUNGS- UND ANSCHLUSSSTÜCK FÜR WELLROHRE**
JOINING AND CONNECTING ELEMENT FOR CORRUGATED PIPES
ELEMENT D'ASSEMBLAGE ET DE RACCORDEMENT POUR TUBES ONDULES

(30) Priorität: 07.03.1997 CH 54697
(43) Veröffentlichungstag der Anmeldung: 22.12.1999
(73) Patentinhaber: PMA AG, 8610 Uster (CH)
(72) Erfinder: SCHWARZ, Ernst, CH-8604 Volketswil (CH); KLEEB, Ralf, CH-8635 Oberdürnten (CH)
(74) Vertreter: Bruderer, Werner
(86) Internationale Anmeldenummer: CH9800050
(87) Internationale Veröffentlichungsnummer: WO9840656

(56) Entgegenhaltungen:
- DE-U- 8 805 482
- DE-U- 9 007 056
- US-A- 4 836 580
- US-A- 5 462 313

## Beschreibung

Die Erfindung betrifft ein Verbindungs- und Anschlussstück für Wellrohre mit mindestens einem von einem Gehäuse umschlossenen Kernhohlraum, mit einer Einstecköffnung zur Aufnahme eines Rohrendes, mindestens einem Durchbruch im Mantel des Gehäuses zur Aufnahme eines zusätzlichen Sperrelementes und mindestens einem radial zum Mantel des Gehäuses ein- und ausrückbaren Sperrelement mit Teilen, welche in den Mantel des Wellrohres eingreifen.

Aus CH 684 293 ist ein Anschlussstück dieser Art bekannt, welches lösbare Sperrelemente zur Verbindung des Anschlussstückes mit dem Ende eines Wellrohres aufweist. Bei diesem Anschlussstück ist im Gehäuse des Anschlussstükkes ein Kernhohlraum mit einer Einstecköffnung zur Aufnahme eines Rohrendes vorgesehen. Im Mantel des Gehäuses befindet sich mindestens ein Durchbruch, welcher zur Aufnahme des Sperrelementes bestimmt ist. Das Sperrelement ist bei dieser bekannten Ausführung aus einem radial schwenkbaren Schwenkflügel gebildet, welcher an einem Ende über ein Scharnier mit dem Gehäuse des Anschlussstückes verbunden ist. Am anderen Ende des Schwenkflügels ist ein Halteelement ausgebildet, welches in der geschlossenen Position des Schwenkflügels in eine entsprechende Halterippe am Gehäuse eingreift. An der gegen den Kernhohlraum des Gehäuses gerichteten Innenfläche des Schwenkflügels sind radial gerichtete, starre Sperrleisten angeordnet, welche bei geschlossenem Schwenkflügel in mindestens eines der Wellentäler am Ende des Wellrohres eingreifen. Das Verbinden dieses bekannten Anschlussstückes mit dem Ende eines Wellrohres erfolgt in der Weise, dass das Wellrohr in den Kernhohlraum eingesteckt und dann der Schwenkflügel in den Durchbruch am Mantel des Gehäuses eingeschwenkt und geschlossen und die Halteelemente eingerastet werden. In dieser Position des Schwenkflügels wird eine sichere und feste Verbindung zwischen dem Anschlussstück und dem Ende des Wellrohres gebildet. Diese Verbindung kann nur mit einem Hilfswerkzeug gelöst werden. Bei der praktischen Anwendung derartiger Verbindungs- und Anschlussstücke wird in der Praxis oft die Forderung gestellt, dass die Verbindungs- und Anschlussstücke vor dem Verbinden mit dem Ende des Wellrohres bereits vollständig vorbereitet sein sollten und nach dem Einstecken des Rohrendes keine zusätzlichen Handlungen mehr notwendig sein sollten. Das Schliessen der Schwenkflügel ist im eingebauten Zustand oft auch erschwert oder kann vom Montagepersonal vergessen werden.

Eine weitere Anschlussarmatur mit einem vom Gehäuse lösbaren Sperrelement ist aus DE 29 08 337 bekannt. Bei dieser Anschlussarmatur ist im Gehäuse ebenfalls ein Durchbruch durch den Mantel angebracht, in welchen in radialer Richtung ein C-förmiges Sperrelement eingesteckt werden kann. An diesem Sperrelement sind an der gegen den Kernhohlraum des Gehäuses gerichteten Innnenfläche starre Rippen angeordnet, welche im eingebauten Zustande des Sperrelementes in die Wellentäler am Ende des Wellrohres eingreifen und dieses blockieren. An beiden freien Enden des C-förmigen Sperrelementes sind Sperrnocken angeordnet, welche in Sperrippen am Gehäuse der Anschlussarmatur eingreifen. Auch dieses Sperrelement wird erst nach dem Einschieben des Rohrendes in den Kernhohlraum der Anschlussarmatur radial eingesteckt und in die Sperrposition gebracht. Da das Sperrelement vom Gehäuse der Anschlussarmatur unabhängig ist, kann es verlorengehen. Bei ungünstiger Lage der Anschlussarmatur ist der richtige Einbau des Sperrelementes in der Montageposition oftmals auch erschwert. Das Lösen der Sperrverbindung erfolgt bei dieser Lösung ebenfalls mit einem Hilfswerkzeug, mittels welchem das Sperrelement aus dem Gehäuse der Anschlussarmatur gelöst und dann radial ausgefahren wird. Das Rohrende kann dann ungehindert aus dem Kernhohlraum der Anschlussarmatur ausgezogen werden, ohne dass die Wellen im Eingriff mit irgend einem Teil des Sperrelementes stehen. Dies erlaubt einen einfachen und störungsfreien Trennvorgang des Rohrendes von der Anschlussarmatur.

DE-U-8 805 482 zeigt ebenfalls eine Anschlussarmatur mit einem vom Gehäuse lösbaren Sperrelement. Im Gegensatz zu der in DE 29 08 337 offenbarten und oben beschriebenen Lösung greifen hier die starren, radial nach innen gerichteten Rippen am Sperrelement nur im Teilbereich eines Wellentales des Wellrohres ein. Im übrigen ist dieses Sperrelement gleich ausgestaltet und weist die gleiche Funktionsweise auf. Es ist deshalb auch mit den gleichen Nachteilen und Schwierigkeiten beim Zusammenbau und beim Lösen der Verbindung behaftet.

Es ist Aufgabe der vorliegenden Erfindung, ein Verbindungs- und Anschlussstück, bzw. eine Armatur für Wellrohre zu schaffen, bei welcher das Sperrelement vollständig aus dem Mantel in radialer Richtung ausgefahren oder ausgeschwenkt werden kann und gleichzeitig ein Einstecken des Rohrendes in das Anschlussstück bei eingerücktem, bzw. geschlossenem Sperrelement möglich ist. Es soll eine vormontierte Anschlussarmatur, bzw. ein Anschlussstück geschaffen werden, bei welchem nach dem Einschieben des Rohrendes in den Kernhohlraum des Gehäuses keine zusätzlichen Handlungen zum Erstellen der Sperrverbindung mehr notwendig sind.

Diese Aufgabe wird durch die im Patentanspruch 1 definierten Merkmale gelöst. Vorteilhafte Weiterbildungen der Erfindung ergeben sich nach den Merkmalen der abhängigen Patentansprüche.

Das erfindungsgemässe Verbindungs- und Anschlussstück weist gegenüber den bekannten Armaturen die gemäss der Aufgabenstellung geforderten Vorteile auf. Die Sperrlaschen, welche an der gegen den Kemhohlraum des Gehäuses gerichteten Innenfläche des Sperrelementes angeordnet sind, sind nicht radial, sondern im wesentlichen axial in Richtung der Längsachse des Anschlussstükkes, bzw. des Kernhohlraumes ausgerichtet. Dies ermöglicht das feste Verbinden eines der Enden der Sperrlasche mit dem Sperrelement und die freie Beweglichkeit des anderen zweiten Endbereiches. Dabei kann die ganze Sperrlasche oder nur ein Teilbereich federnd ausgebildet sein. Zwischen dem frei beweglichen zweiten Endbereich der Sperrlaschen und einer Nutfläche an der Innenfläche des Sperrelementes ist ein freier Zwischenraum ausgebildet, welcher die Beweglichkeit des freien Endbereiches gewährleistet. Zur Arretierung des in den Kernhohlraum des Gehäuses eingesteckten Endes des Wellrohres sind am beweglichen Endbereich der Sperrlaschen Sperrklinken ausgebildet, welche in gesperrtem Zustand in eines der Wellentäler am Mantel des Wellrohres eingreifen. Beim Einschieben des Wellrohres in den Kernhohiraum des Gehäuses werden diese Sperrklinken nach aussen verdrängt, was durch die Elastizität der Sperrlaschen und den freien Zwischenraum hinter den Sperrlaschen möglich ist. Bei Belastungen des Wellrohres entgegen der Einschubrichtung, d.h. wenn das Rohr und die Armatur gegenseitig auf Zug belastet werden, rasten die Sperrklinken an den Sperrlaschen in den Mantel des Wellrohres ein und verkrallen sich in den Wellentälern. Ein Ausziehen des Rohres aus der Armatur ist nicht möglich, da die Form der Sperrklinken ein radiales Ausweichen verhindert und ein Verkrallen durch die Federwirkung erfolgt. Ein Lösen der Sperrverbindung ist nur möglich, wenn das Sperrelement radial aus dem Mantel des Verbindungs- oder Anschlussstückes ausgeschwenkt oder ausgefahren wird. Dies ist in bekannter Weise mit Hilfe eines Hilfswerkzeuges möglich und zwar bei der Ausgestaltung des Sperrelementes als Schwenkflügel, wie auch als C-förmiges Zusatzelement oder in einer anderen Form, welche radial aus dem Gehäuse ausrückbar ist.

Die erfindungsgemässe Ausgestaltung der Verbindungs- und Anschlussarmatur ermöglicht das Schliessen, bzw. Einrücken des Sperrelementes in das Gehäuse, bevor das Rohrende in den Kernhohlraum eingesteckt wird. Dadurch können die entsprechenden Armaturen vormontiert werden und die Sperrelemente müssen nach dem Einstecken des Rohrendes in die Armatur nicht mehr durch eine zusätzliche Montagehandlung in die Sperrposition gebracht werden. Bei der Ausgestaltung des Sperrelementes als Zusatzelement ergibt sich auch der Vorteil, dass dieses Zusatzelement beim Transport, Lagern und Einbauen der Armatur nicht mehr verloren gehen kann, da es bereits in die Armatur eingebaut, bzw. eingerückt und in der Sperrposition mit dieser lösbar verbunden ist. Mit der erfindungsgemässen Ausgestaltung werden somit die Vorteile der bekannten Armaturen mit radial ausrückbaren Sperrelementen beibehalten und zusätzlich der Vorteil bewirkt, dass eine Vormontage möglich ist und das Rohrende auch bei eingerücktem Sperrelement in die Armatur eingeschoben werden kann. Zur Demontage der Verbindung ist das Sperrelement weiterhin mit einem Hilfswerkzeug einfach lösbar und die Verbindung zwischen Rohrende und Armatur einwandfrei trennbar, ohne dass das Rohrende oder das Sperrelement beschädigt würde. Ein erfindungsgemässes Verbindungs- und Anschlussstück kann somit beliebig oft wiederverwendet werden, da beim Trennen und Zusammenbauen von Rohr und Anschlussstück keine Beschädigung der Sperrklinken oder Sperrlaschen am Sperrelement bewirkt wird. Zu den bereits bekannten Vorteilen der bekannten Verbindungs- und Anschlussstücke mit radial ausrückbaren Sperrelementen ergeben sich noch die zusätzlichen Vorteile der Handhabung und der einfacheren Montage.

Im folgenden wird die Erfindung anhand von Ausführungsbeispielen unter Bezugnahme auf die beiliegenden Zeichnungen näher erläutert. Es zeigen:
- Fig. 1: Eine Seitenansicht eines Anschlussstückes mit zwei aufgeklappten Sperrelement in der Form von Schwenkflügeln,
- Fig. 2: einen Querschnitt durch das Anschtussstück gemäss Fig. 1 im Bereiche der Schwenkflügel,
- Fig. 3: einen Längsschnitt durch das Anschlussstück gemäss Fig. 1 mit eingerücktem Sperrelement,
- Fig. 4: einen Querschnitt durch das Sperrelement im Bereiche einer Sperrlasche,
- Fig. 5: ein C-förmiges Sperrelement mit einem Teilausschnitt eines Gehäuses, und
- Fig. 6: einen Querschnitt durch das Sperrelement gemäss Fig. 5 im Bereiche einer Sperrlasche.

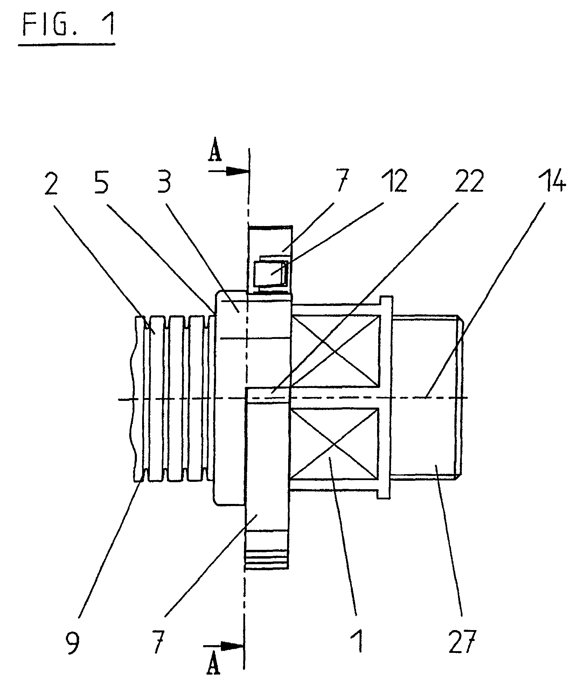

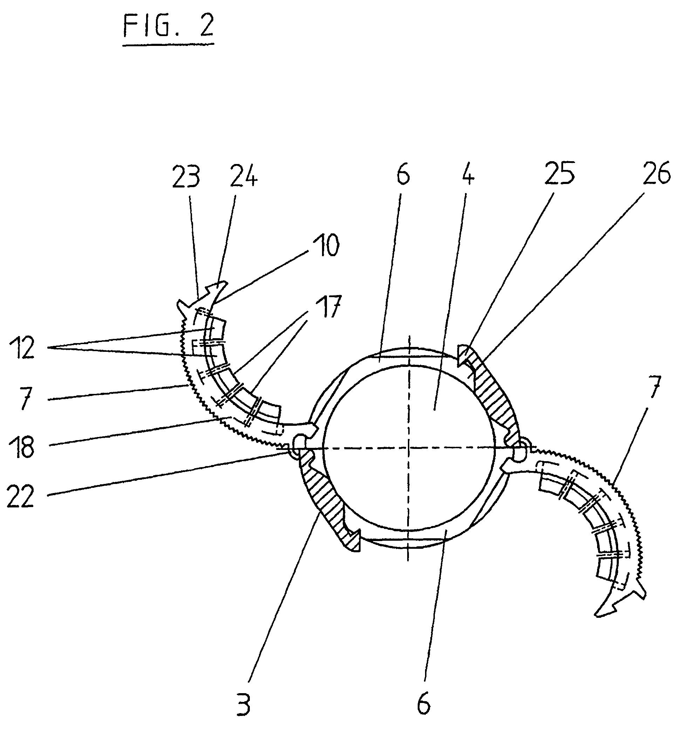

Das in Fig. 1 dargestellte Anschluss- und Verbindungsstück 1 weist ein Gehäuse 3 und einen Gewindestutzen 27 auf. Im Gehäuse 3 ist ein Kernhohlraum 4 angeordnet, welcher sich in Richtung der Längsachse 14 erstreckt. Dieser Kernhohlraum 4 dient der Aufnahme des Endes eines Wellrohres 2, welches in diesem Bereich mit dem Gehäuse 3 verbunden wird. Am Gehäuse 3 sind zwei Sperrelemente in der Form je eines Schwenkflügels 7 angelenkt, und zwar über ein Scharnier 22. Das freie Ende jedes Schwenkflügels 7 greift in geschlossenem Zustand in einen Sperrbereich 26 (siehe Figur 2) am Gehäuse 3 ein und wird über einen Sperrhaken 25 verriegelt. Die Ausgestaltung des Gehäuses 3 und des Schwenkflügels 7 ergibt sich in an sich bekannter Weise aus CH 684 293.

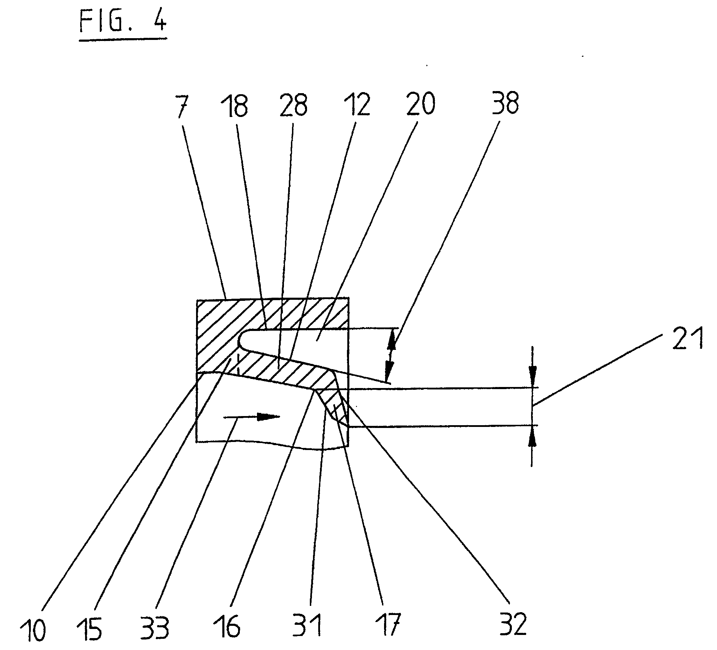

Fig. 2 zeigt einen Querschnitt durch die Armatur gemäss Fig. 1 und zwar entlang der Linie A-A. Über das Scharnier 22 ist jeder Schwenkflügel 7, welcher ein Sperrelement bildet, mit dem Gehäuse 3 verbunden. Am freien Ende 23 des Schwenkflügels 7 ist ein Halteelement 24 ausgebildet, welches bei geschlossenem Zustand des Schwenkflügels 7 in den Sperrbereich 26 eingreift und mit dem Sperrhaken 25 zusammenwirkt. Im Gehäuse 3 ist ein radialer Durchbruch 6 ausgebildet, in welchen das Sperrelement, bzw. der Schwenkflügel 7 eingerückt wird. Im dargestellten Beispiel sind zwei solche Durchbrüche 6 vorhanden, welche sich gegenüberliegen. An der Innenfläche 10 des Sperrelementes 7, welche in geschlossenem Zustand des Schwenkflügels 7 gegen den Kernhohlraum 4 des Gehäuses 3 gerichtet ist, sind mehrere Sperrlaschen 12 angeordnet. Die Ausgestaltung dieser Sperrlaschen 12 ist aus Fig. 4 ersichtlich, welche einen Querschnitt durch das Sperrelement 7 im Bereiche einer Sperrlasche 12 darstellt und mit Hilfe dieser Figur 4 näher erläutert. Jede der Sperrlaschen 12 ist an einem ersten Ende 15 mit der Innenfläche 10 des Sperrelementes 7 verbunden. Dieses erste Ende 15 ist im eingerückten Zustand des Sperrflügels 7 gegen die Einstecköffnung 5 des Gehäuses 3 gerichtet. Der zweite gegenüberliegende Endbereich 16 der Sperrlasche 12 ist frei beweglich und von der Einstecköffnung 5 des Kernhohlraumes 4 am Gehäuse 3 weggerichtet. Die Sperrlaschen 12 erstrecken sich somit im wesentlichen in Richtung der Längsachse 14 des Kernhohlraumes 4. Im dargestellten Beispiel ist das ganze Sperrelement 7 aus einem formfesten, elastischen Kunststoff hergestellt und jede Sperrlasche 12 wirkt als Feder. Damit die Federwirkung der Sperrlaschen 12 ausgenutzt werden kann, ist zwischen dem freien zweiten Endbereich 16 jeder Sperrlasche 12 und einer Nutfläche 18 an der Innenfläche 10 des Sperrelementes 7 ein Zwischenraum 20 ausgebildet. Bei radialer Krafteinwirkung auf das freie Ende 16 der Sperrlasche 12 kann dieses Ende 16 federnd in den Zwischenraum 20 in radialer Richtung ausweichen. Am zweiten freien Ende jeder Sperrlasche 12 ist eine Sperrklinke 17 ausgebildet, welche sich in radialer Richtung gegen die Achse 14 des Kernhohlraumes 4 erstreckt. Die Sperrklinke 17 weist an der gegen die Einstecköffnung 5 des Kernhohlraumes 4 gerichteten Seite eine schräge Rampenfläche 31 auf, welche von der Einstecköffnung 5 weg verläuft. Die daran anschliessende entgegengesetzte Fläche ist als Rückhaltefläche 32 ausgebildet, und diese Rückhaltefläche 32 verläuft etwa rechtwinklig zur Achse 14 des Kernhohlraumes 4 oder weist eine etwas geringere Neigung auf als die Rampenfläche 31. Dadurch erhält die Sperrklinke 17 die Form einer Kralle. Wird ein Rohrende in Richtung des Pfeiles 33 gegen die Sperrklinke 17 geschoben, so wird diese aufgrund der schrägen Rampenfläche 31 radial ausgelenkt. Dabei ist die Höhe 21 der Sperrklinke 17 etwa gleich gross wie der Zwischenraum 20 hinter der Sperrlasche 12, sodass das Rohrende ungehindert durchgeschoben werden kann. Sobald das Rohrende vollständig eingeschoben ist, rastet die Sperrklinke 17 in ein Wellental am Mantel 9 des Rohres 2 ein und sperrt allfällige Bewegung entgegen der Richtung des Pfeiles 33. In der nicht gesperrten Position ist zwischen jeder Sperrlasche 12 und der Nutfläche 18 ein Winkel 38 zwischen 0° und ca. 30° ausgebildet. Die Nutfläche 18 verläuft dabei parallel zur Mittelachse 14 und die Sperrlasche 12 parallel oder nach Innen konvergierend. Die Formgebung der Sperrklinke 17 und das parallele oder leicht schräge Mittelteil 28 an der Sperrlasche 12 bewirken, dass sich die Sperrklinke 17 bei Belastungen antgegen der Richtung des Pfeiles 33 in Richtung der Mittelachse 14 des Kernhohlraumes 4 einkrallen und ein eingeschobenes Rohrende 2 im Gehäuse 3 festhalten. Das Mittelteil 28 der Sperrlasche 12 wird dabei federnd in den Hohlraum 20 nach Aussen gebogen und die Sperrklinke 17 radial nach Innen gedrückt.

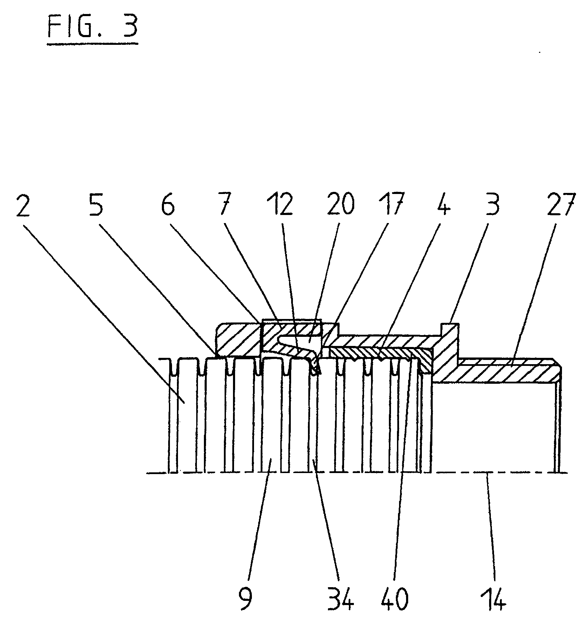

In Fig. 3 ist die Armatur mit eingeschobenem Ende eines Rohres 2 dargestellt, wobei die Sperrflügel 7 in Sperrposition eingerückt und verriegelt sind. Die Sperrklinke 17 ist dabei in ein Wellental 34 am Mantel 9 des Rohres 2 eingerückt und sperrt dieses gegen Ausziehen aus dem Gehäuse 3. Allfällige Ausziehkräfte bewirken ein verstärktes Einkrallen der Sperrklinke 17 in den Mantel 9 des Rohres 2, sodass ein Ausziehen des Rohres 2 aus dem Kernhohlraum 4 des Gehäuses 3 verunmöglicht wird. Das Ausziehen des Rohres 2 aus dem Gehäuse 3 ist erst möglich, wenn der Schwenkflügel 7 radial aus dem Durchbruch 6 ausgeschwenkt, bzw. ausgerückt und damit auch die Sperrlaschen 12 und die zugehörigen Sperrklinken 17 aus dem Mantel 9 des Wellrohres 2 ausgerückt sind. Am inneren Ende des Kernhohlraumes 4 ist eine Dichtung 40 eingelegt, welche den Mantel 9 des Rohres 2 gegen das Gehäuse 3 abdichtet.

Das zu den Figuren 1 bis 4 beschriebene Sperrelement 7 mit mindestens zwei Sperrlaschen 12 lässt sich beliebig oft ein- und ausrücken. Beim Herstellen oder Trennen der Sperrverbindung zwischen Rohr 2 und Gehäuse 3 wird das Sperrelement 7 nicht beschädigt und kann deshalb mehrfach verwendet werden. Trotzdem ist die Sperrverbindung sehr sicher und widersteht hohen Ausziehkräften am Rohr 2.

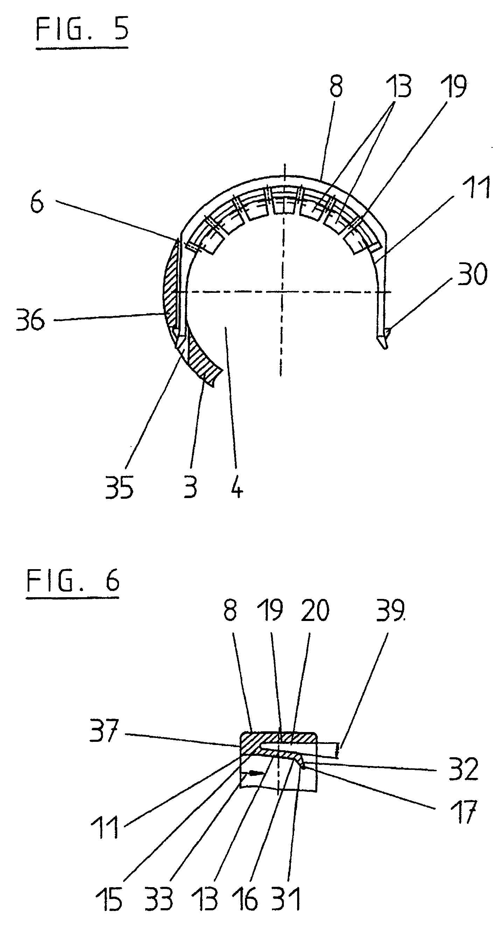

In Fig. 5 ist ein Sperrelement 8 dargestellt, wie es als Zusatzelement verwendet wird. Im Gehäuse 3 eines Anschlussstückes 1 ist im Mantel ein radialer Durchbruch 6 angeordnet, in welchen das Sperrelement 8 radial eingeschoben wird. Das Sperrelement 8 ist C-förmig und weist an den freien Enden Halteelemente 30 auf, welche in Führungen 35 am Gehäuse 3 eingesteckt werden und mit Rippen 36 zusammenwirken. Das Gehäuse 3 des Anschlussstückes 1 ist in Fig. 5 nur im linken Teilbereich als Teilschnitt dargestellt, um die Verbindung zwischen dem Sperrelement 8 und dem Gehäuse 3 zu veranschaulichen. Weitere Einzelheiten zu dieser Art der Verbindung zwischen dem Wellrohr 2 und dem Gehäuse 3 mit einem Sperrelement in der Form eines Zusatzelementes 8 entsprechen der an sich bekannten Ausführung gemäss DE 29 08 337. Bei der erfindungsgemässen Ausführung sind am Sperrelement 8 an der in der Sperrposition gegen den Kernhohlraum 4 des Gehäuses 3 gerichteten Innenfläche 11 Sperrlaschen 13 angeordnet.

Fig. 6 zeigt einen Radialschnitt durch das Sperrelement 8 gemäss Figur 5 im Bereiche einer Sperrlasche 13. In eingerücktem Zustand des Sperrelementes 8 ist die Stirnfläche 37 des Sperrelementes 8 gegen die Einstecköffnung 5 des Kernhohlraumes 4 gerichtet (siehe Figur 1). Der erste Endbereich 15 der Sperrlasche 13 ist mit der Innenfläche 11 im Bereiche der Stirnfläche 37 verbunden. Das von der Stirnfläche 37 weggerichtete zweite Ende 16 der Sperrlasche 13 ist frei beweglich, und die Sperrlasche 13 ist etwa in Richtung der Längsachse 14 des Kernhohlraumes 4 gerichtet. Das Sperrelement 8 ist auch bei diesem Ausführungsbeispiel aus formfestem, elastischen Kunststoff gefertigt, und das Material weist eine Festigkeit auf, welche der Sperrlasche 13 die Funktion einer Feder verleiht. Am freien Endbereich 16 der Sperrlasche 13 ist wiederum eine Sperrklinke 17 ausgebildet, welche in Richtung der Stirnfläche 37 eine schräge Rampenfläche 31 aufweist. Die mit der Rampenfläche 31 zusammenstossende gegenüberliegende Rückhaltefläche 32 verläuft etwa radial zur Längsachse 14 des Kernhohlraumes 4 oder weist eine etwas geringere Neigung auf als die Rampenfläche 31. An der Innenfläche 11 des Sperrelementes 8 ist auch bei diesem Ausführungsbeispiel eine Nute mit einer Nutfläche 19 ausgebildet, und zwischen dieser Nutfläche 19 und dem freien Endbereich 16 der Sperrlasche 13 besteht ein freier Zwischenraum 20. Auch bei diesem Ausführungsbeispiel schliessen die Sperrlaschen 13 mit der Nutfläche 19 einen Winkel 39 zwischen 0° und etwa 30° ein. Die Sperrlasche 13 ist in radiale Richtung nach aussen auslenkbar, bis sie an der Nutfläche 19 anliegt und die Sperrklinke 17 praktisch in der Nute versenkt ist. Dieses Auslenken der Sperrlasche 13 erfolgt durch Einstecken eines Rohrendes in Richtung des Pfeiles 33 und über die Rampenfläche 31. Wenn das Wellrohr 2 vollständig in das Anschlussstück 1 eingesteckt ist, und das ein Zusatzelement bildende Sperrelement 8 in das Gehäuse 3 eingerückt und über die Halteelemente 30 und die Rippen 36 gesperrt ist, greifen die Sperrklinken 17 an den Sperrlaschen 13 in mindestens ein Wellental am Wellrohr 2 und blockieren dieses gegen Ausziehen in Richtung der Längsachse 14, bzw. entgegen der Richtung des Pfeiles 33 aus dem Gehäuse 3. Ein Lösen der Verbindung zwischen Wellrohr 2 und Gehäuse 3 ist nur möglich, wenn das Sperrelement 8 radial aus dem Durchbruch 6 am Gehäuse 3 ausgerückt und das Wellrohr 2 freigegeben wird. Auch bei dieser Ausführungsform ist das Sperrelement 8 mit den federnden Sperrlaschen 13 beliebig oft verwendbar, da beim Herstellen und beim Trennen der Verbindung zwischen Wellrohr 2 und Gehäuse 3 keine Beschädigung der Sperrelemente 8, bzw. Sperrlaschen 13 erfolgt. Trotzdem gewährleisten Sperrelemente 8 der erfindungsgemässen Art eine absolut sichere Verbindung zwischen Wellrohr 2 und Anschlussstück 1. Die Wirkung der Sperrlaschen 13 mit den Sperrklinken 17 ist die gleiche wie in Figur 4 beschrieben. Die erfindungsgemässe Ausgestaltung und Anordnung der Sperrlaschen 13 bewirkt bei zunehmender Auszugskraft am Rohr 2 ein zunehmendes Verkrallen der Sperrklinken 17 im Rohrmantel. Im entlasteten Zustande ist ein Entsperren ohne Schwierigkeiten und in bekannter Weise mit einem Hilfswerkzeug möglich.

## Patentansprüche

1. Verbindungs- und Anschlusstück (1) für Wellrohre (2) mit mindestens einem, von einem Gehäuse (3) umschlossenen Kernhohlraum (4) mit einer Einstecköffnung (5) zur Aufnahme eines Rohrendes, mindestens einem Durchbruch (6) im Mantel des Gehäuses (3), zur Aufnahme eines zusätzlichen Sperrelementes (7; 8) und mindestens einem radial zum Mantel des Gehäuses (3) ein- und ausrückbaren Sperrelement (7; 8) mit Teilen (17), welche in den Mantel (9) des Wellrohres (2) eingreifen, wobei an der gegen den Mantel (9) des Wellrohres (2) gerichteten Innenfläche (10; 11) des Sperrelementes (7; 8) mindestens zwei Sperrlaschen (12; 13) angeordnet sind, welche in Richtung der Längsachse (14) des Kernhohlraumes (4) ausgerichtet sind, ein erster Endbereich (15) dieser Sperrlaschen (12; 13) mit der Innenfläche (10; 11) des Sperrelementes (7; 8) verbunden und der zweite Endbereich (16) von der Einstecköffnung (5) für das Wellrohr (2) des Kernhohraumes (4) weggerichtet und frei beweglich ist, mindestens ein Teilbereich jeder Sperrlasche (12; 13) elastisch und als Feder ausgebildet ist und am freien Endbereich (16) jeder Sperrlasche (12; 13) eine Sperrklinke (17) ausgebildet ist und diese Sperrklinke (17) gegen die Längsachse (14) des Kernhohraumes (4) gerichtet ist.

2. Verbindungs- und Anschlusstück nach Patentanspruch 1, **dadurch gekennzeichnet, dass** die Sperrklinke (17) etwa radial zur Längsachse (14) des Kernhohlraumes (4) gerichtet ist.

3. Verbindungs- und Anschlusstück nach Patentanspruch 1 oder 2, **dadurch gekennzeichnet**, zwischen dem freien Endbereich (16) jeder Sperrlasche (12; 13) und einer Nutfläche (18; 19) an der Innenfläche (10; 11) des Sperrelementes (7; 8) ein Zwischenraum (20) ausgebildet ist und dieser Zwischenraum (20) mindestens so gross ist wie die radiale Höhe (21) der Sperrklinke (17).

4. Verbindungs- und Anschlusstück nach einem der Patentansprüche 1 bis 3, **dadurch gekennzeichnet, dass** das Sperrelement ein Schwenkflügel (7) ist, dieser Schwenkflügel (7) einseitig über ein Scharnier (22) mit dem Gehäuse (3) verbunden ist und am anderen schwenkbaren Ende (23) des Schwenkflügels (7) ein Halteelement (24) angeordnet ist, welches in der eingerückten Position des Sperrelementes (7) in einen Sperrhaken (25) am Gehäuse (3) eingreift.

5. Verbindungs- und Anschlusstück nach einem der Patentansprüche 1 bis 3, **dadurch gekennzeichnet, dass** das Sperrelement ein vom Gehäuse (3) unabhängiges Zusatzelement (8) ist, dieses Zusatzelement (8) radial in den Durchbruch (6) des Gehäuses (3) einsteckbar ist, am Zusatzelement (8) Halteelemente (30) angeordnet sind und diese Halteelemente (30) in der eingerückten Position des Sperrelementes (8) in Halterippen (36) am Gehäuse (3) eingreifen.

6. Verbindungs- und Anschlussstück nach einem der Patentansprüche 1 bis 5, **dadurch gekennzeichnet, dass** die Sperrklinke (17) der Sperrlaschen (12; 13) an der gegen die Einstecköffnung (5) des Kernhohlraumes (4) gerichteten Seite eine schräge, von der Einstecköffnung (5) des Kernhohlraumes (4) weg verlaufende Rampenfläche (31) aufweist und die gegenüberliegende Rückhaltefläche (32) etwa rechtwinklig zur Achse (14) des Kernhohlraumes (4) oder etwas geringer geneigt als die Rampenfläche (31) verläuft.

7. Verbindungs- und Anschlussstück nach einem der Patentansprüche 1 bis 6, **dadurch gekennzeichnet, dass** im ausgerückten Zustand der Sperrelemente (7; 8) zwischen den Sperrlaschen (12; 13) und den Nutflächen (18; 19) ein Winkel (38; 39) von maximal 30° eingeschlossen ist.

## Claims

1. Connection and attachment piece (1) for corrugated pipes (2) having at least one core cavity (4), which is enclosed by a housing (3) and has an insertion opening (5) for receiving a pipe end, at least one hole (6) in the lateral surface of the housing (3) for receiving an additional locking element (7; 8) and at least one locking element (7; 8), which is movable radially inwards and outwards relative to the lateral surface of the housing (3) and has parts (17), which engage into the lateral surface (9) of the corrugated pipe (2), wherein disposed on the inner surface (10; 11) of the locking element (7; 8) directed towards the lateral surface (9) of the corrugated pipe (2) are at least two locking clips (12; 13), which are aligned in the direction of the longitudinal axis (14) of the core cavity (4), a first end region (15) of said locking clips (12; 13) is connected to the inner surface (10; 11) of the locking element (7; 8) and the second end region (16) is directed away from the insertion opening (5) of the core cavity (4) for the corrugated pipe (2) and is freely movable, at least one sub-region of each locking clip (12; 13) is elastic and designed as a spring and a detent pawl (17) is formed on the free end region (16) of each locking clip (12; 13) and said detent pawl (17) is directed towards the longitudinal axis (14) of the core cavity (4).

2. Connection and attachment piece according to claim 1, **characterized in that** the detent pawl (17) is directed approximately radially relative to the longitudinal axis (14) of the core cavity (4).

3. Connection and attachment piece according to claim 1 or 2, **characterized in that** a gap (20) is formed between the free end region (16) of each locking clip (12; 13) and a groove surface (18; 19) at the inner surface (10; 11) of the locking element (7; 8) and said gap (20) is at least as great as the radial height (21) of the detent pawl (17).

4. Connection and attachment piece according to one of claims 1 to 3, **characterized in that** the locking element is a swivel wing (7), said swivel wing (7) is connected at one end by a hinge (22) to the housing (3) and on the other hingeable end (23) of the swivel wing (7) a retaining element (24) is disposed, which in the inwardly moved position of the locking element (7) engages into a locking hook (25) of the housing (3).

5. Connection and attachment piece according to one of claims 1 to 3, **characterized in that** the locking element is an additional element (8) independent of the housing (3), said additional element (8) is insertable radially into the hole (6) of the housing (3), retaining elements (30) are disposed on the additional element (8) and said retaining elements (30) in the inwardly moved position of the locking element (8) engage into retaining ribs (36) on the housing (3).

6. Connection and attachment piece according to one of claims 1 to 5, **characterized in that** the detent pawl (17) of the locking clips (12; 13) at the side directed towards the insertion opening (5) of the core cavity (4) has an oblique ramp surface (31), which extends away from the insertion opening (5) of the core cavity (4), and the opposite retaining surface (32) extends approximately at right angles to the axis (14) of the core cavity (4) or is slightly less inclined than the ramp surface (31).

7. Connection and attachment piece according to one of claims 1 to 6, **characterized in that** in the outwardly moved state of the locking elements (7; 8) an angle (38; 39) of at most 30° is enclosed between the locking clips (12; 13) and the groove surfaces (18; 19).

## Revendications

1. Pièce de liaison et de raccordement (1) pour tubes ondulés (2) comportant au moins une cavité d'âme (4) entouré par un boîtier (3) doté d'une ouverture d'insertion (5) pour la réception d'une extrémité de tube, au moins un percement (6) dans l'enveloppe du boîtier (3) pour la réception d'un élément de blocage (7 ; 8) supplémentaire, et au moins un élément de blocage (7 ; 8) apte à être engrené et désengrené radialement par rapport à l'enveloppe du boîtier (3) et doté de pièces (17) qui s'engagent dans l'enveloppe (9) du tube ondulé (2), dans laquelle, sur la face intérieure (10 ; 11) de l'élément de blocage tournée vers l'enveloppe (9) du tube ondulé (2), sont disposées au moins deux pattes de blocage (12 ; 13) qui sont orientées dans la direction de l'axe longitudinal (14) de la cavité d'âme (4), une première région d'extrémité (15) de ces pattes de blocage (12 ; 13) étant reliée à la face intérieure (10 ; 11) de l'élément de blocage (7 ; 8) et la deuxième région d'extrémité (16) étant tournée en éloignement de l'ouverture d'insertion (5) pour le tube ondulé de la cavité d'âme (4) et étant libre de se déplacer, au moins une partie de chaque patte de blocage (12 ; 13) étant élastique et configurée comme ressort, et un cliquet de blocage (17) étant réalisé dans la zone d'extrémité libre (16) de chaque patte de blocage (12 ; 13) et ce cliquet de blocage (17) étant orienté vers l'axe longitudinal (14) de la cavité d'âme (4).

2. Pièce de liaison et de raccordement selon la revendication 1, **caractérisée en ce que** le cliquet de blocage (17) est orienté sensiblement radialement par rapport à l'axe longitudinal (14) de la cavité d'âme (4).

3. Pièce de liaison et de raccordement selon l'une ou l'autre des revendications 1 et 2, **caractérisée en ce qu'**un espace intermédiaire (20) est formé entre la zone d'extrémité libre (16) de chaque patte de blocage (12 ; 13) et une surface de rainure (18 ; 19) et **en ce que** cet espace intermédiaire (20) est au moins aussi grand que la hauteur radiale (21) du cliquet de blocage (17).

4. Pièce de liaison et de raccordement selon l'une quelconque des revendications 1 et 3, **caractérisée en ce que** l'élément de blocage est une aile pivotante (7), cette aile pivotante (7) étant reliée d'un côté au boîtier (3) par l'intermédiaire d'une charnière (22), et **en ce que** sur l'autre extrémité pivotante (23) de l'aile pivotante (7) est agencé un élément de retenue (24) qui s'engage dans un crochet de blocage (25) prévu sur le boîtier (3) lorsque l'élément de blocage (7) est en position engrenée.

5. Pièce de liaison et de raccordement selon l'une quelconque des revendications 1 et 3, **caractérisée en ce que** l'élément de blocage est un élément supplémentaire (8) indépendant du boîtier (3), cet élément supplémentaire pouvant être inséré radialement dans le percement (6) du boîtier (3), et **en ce que** des éléments de retenue (30) sont agencés sur l'élément supplémentaire (8), ces éléments de retenue (30) s'engageant dans des nervures de retenue (36) prévues sur le boîtier (3) lorsque l'élément de blocage (8) est dans sa position engrenée.

6. Pièce de liaison et de raccordement selon l'une quelconque des revendications 1 et 3, **caractérisée en ce que** sur le côté tourné vers l'ouverture d'insertion (5) de la cavité d'âme (4), le cliquet de blocage (17) des pattes de blocage (12 ; 13) présente une surface de rampe oblique, s'éloignant de l'ouverture d'insertion (5) de la cavité d'âme (4) et **en ce que** la surface de retenue (32) opposée s'étend approximativement perpendiculairement à l'axe (14) de la cavité d'âme (4) ou suivant une inclinaison un peu inférieure à celle de la surface de rampe (31).

7. Pièce de liaison et de raccordement selon l'une quelconque des revendications 1 et 6, **caractérisée en ce qu'**à l'état désengrené des éléments de blocage (7 ; 8), un angle d'au maximum 30° est formé entre les pattes de blocage (12 ; 13) et les surfaces de rainure (18 ; 19).
